# EUROPEAN PATENT APPLICATION

(11) **EP 2 362 123 A1**
(43) Date of publication of application: **31.08.2011**
(21) Application number: 10153872.6
(22) Date of filing: 17.02.2010
(51) Int. Cl.: F16K 1/02, F16K 1/20, F16K 31/46, F16K 31/52, F16K 31/524

(54) **Underground shut-off valve with a hinged flap**

(71) Applicant: Aage V. Kjærs Maskinfabrik A/S, 8464 Galten (DK)
(72) Inventor: Freudendahl, Erling A., 8464 Galten (DK)
(74) Representative: Jensen, Peter Kim

(57) **Abstract**

An underground shut-off valve comprises a housing (1) defining an axial flow passage (6) for fluid flow in an axial direction (7) between a first opening (4) and a second opening (5) of the housing (1), the valve further comprising a flap (8) having a front side and a back side, the flap (8) being hinged for movement around a first hinge axis (10), the first hinge axis (10) being arranged within the valve housing (1), outside the flow passage (6), and extending transversely of the axial direction (7) such that the flap (8) may be swung between an open position away from the flow passage (6) and a closed position where the flap (8) closes the flow passage (6) fluid-tight by means of a seal provided between the flap (8) and a cooperating valve seat, wherein the valve further comprises inside the housing (1) in a control chamber (33) communicating with the flow passage (6) a lever mechanism configured to act upon the backside of the flap (8) for controlling the flap movement and for locking the flap (8) in the closed position, the lever mechanism being linked to a spindle drive (13) for operation with a spindle (14), the spindle (14) extending from the inside to the outside of the housing (1). The lever mechanism comprises a locking lever (19), a proximal end (20) of the locking lever (19) being hinged to the housing (1) for movement around a second hinge axis (23) arranged outside the flow passage (6) substantially parallel to the first hinge axis (10), and a distal end (21) of the locking lever (19) being configured to engage the back side of the flap (8) by friction coupling so as to wedge the locking lever (19) against the backside of the flap (8).

## Description

The invention relates to an underground shut-off valve comprising a housing defining an axial flow passage for fluid flow in an axial direction between a first opening and a second opening of the housing, the valve further comprising a flap having a front side and a back side, the flap being hinged for movement around a first hinge axis, the first hinge axis being arranged within the valve housing, outside the flow passage, and extending transversely of the axial direction such that the flap may be swung between an open position away from the flow passage and a closed position where the flap closes the flow passage fluid-tight by means of a seal provided between the flap and a cooperating valve seat, wherein the valve further comprises inside the housing in a control chamber communicating with the flow passage a lever mechanism configured to act upon the backside of the flap for controlling the flap movement and for locking the flap in the closed position, the lever mechanism being linked to a spindle drive for operation with a spindle, the spindle extending from the inside to the outside of the housing.

In underground pipe installations for transporting liquid or gaseous fluids commonly used shut-off valves are of the gate valve type. Such gate valves have a flow passage that may be closed fluid tight by bringing a valve member from an open position outside the flow passage to a closed position in the flow passage where the valve member cooperating with a corresponding valve seat blocks the flow. In such underground gate valves, the movement of the valve member is typically actuated by a spindle drive that via an operating rod may be operated from above ground. When turning the operating rod, the spindle is turned and a threaded portion of the spindle cooperates with a corresponding thread on the valve member to translate the rotational motion into a linear movement of the valve member between the open and closed position. One advantage of such shut-off valves is a short installation length. Furthermore, when fully open, a typical gate valve has essentially no obstruction in the flow path, resulting in very low friction loss for flow through the installed valve. However, the sliding movement of gate valve members requires a lot of activation force; in particular in the region close to the closed position, both for bringing the gate valve member into the fully closed position and for breaking open the gate valve from the fully closed position.

An underground shut-off valve with reduced activation force is known from US 2,573,648. US 2,573,648 discloses a check-valve that may be operated as a shut-off valve. The valve comprises a valve disk that is hinged about an axis in the flow passage of the valve somewhat upwardly of the centre of the disk. The valve is provided with a spindle drive acting upon a mechanism of rods configured to provide a toggle action of the parts or a wedging action so that a closing pressure may be applied pressing the disk against its seat, while most of the closing pressure is via the rods transferred to pivot supports in the valve housing. However, the mechanism of US 2,573,648 is also in the open position arranged in the flow passage of the valve, obstructing the passage and making the valve incompatible with the use of modern in-line service equipment for inspection or cleaning, such as the use of cleaning pigs.

An other underground shut-off valve with reduced activation force is known from DE 63422 C. DE 63422 C discloses a shut-off valve of the above-mentioned type, where the valve member is a hinged flap that is controlled by means of a linkage connected to a spindle drive for operation from above ground. In this construction, the valve disk is controlled via a connecting rod and a hinge member connected to the end of the stem of the vertically arranged spindle. A pair of support rods is pivoted to the hinge member and extends in a direction away from the valve flap towards an opposing surface of the valve chamber. When the valve flap is brought into its closed position by means of the spindle drive and the connecting rod, the support rods are configured to provide a wedging action between the valve flap and the opposing surface. This construction is rather spacious resulting in a large installation length. Furthermore the construction according to DE 63422 requires a large chamber with transverse dimensions exceeding those of the pipes connected thereto, and comprises surfaces adapted to receive a distal end of the support rods. Such a valve chamber increases the flow resistance of the shut-off valve, is prone to accumulate contaminants, and is difficult to clean, without directly opening the valve housing itself, using standard in-line inspection and cleaning equipment, such as cleaning pigs.

Object of the invention is to provide an improved underground shut-off valve with substantially reduced actuation forces, which is suitable for the use of standard in-line maintenance equipment for inspection and/or cleaning, such as cleaning pigs, and may be built according to standard requirements for installation lengths, such as a total length compliant with European Norm EN 558. Preferably, the improved valve also provides a low flow resistance and/or has reduced service intervals.

The object of the invention is attained by an underground shut-off valve of the above-mentioned type, wherein the lever mechanism comprises a locking lever, a proximal end of the locking lever being hinged to the housing for movement around a second hinge axis arranged outside the flow passage substantially parallel to the first hinge axis, and a distal end of the locking lever being configured to engage the back side of the flap by friction coupling so as to wedge the locking lever against the back-side of the flap.

In its open position, the flap is fully removed from the actual flow passage so as to reduce flow resistance and in order to avoid inspection and/or cleaning equipment from interfering with or getting caught by the flap.

In its closed position, the flap covers the full cross-section of the flow passage and cooperates with the valve seat or the inner walls of the housing acting as valve seat to block for flow through the flow passage in both directions. Sealing means may be provided on the flap and/or in the valve seat. Typically a peripheral soft seal is provided on the valve member cooperating with the inner walls of the housing or a valve seat provided on the inner walls of the housing to provide a fluid-tight seal.

The flap may be swung around the first hinge axis, i.e. the flap hinge axis. The term closing the flap refers to a movement of the flap in a direction from the open position towards the closed position, whereas the term opening the flap refers to a movement in the opposite direction. Opening the flap from its closed position in sealing engagement with the cooperating valve seat implies lifting the flap away from the valve seat.

The movement of the flap may be forced by the locking lever acting on the backside of the flap. The locking lever may be swung around the second hinge axis, i.e. the locking lever hinge axis, in a swing plane perpendicular to the second hinge axis. When closing the valve, the distal end of the locking lever is pushed towards the backside of the flap. The distal end of the locking lever engages the sliding surface on the backside of the flap by friction coupling in a point of contact. The movement of the locking lever with respect to the sliding surface may be described in terms of the radius from the second hinge axis to the point of contact where the distal end of the locking lever touches the sliding surface.

More particular, the movement may be characterised by an actuation angle that the radius in a plane perpendicular to the second hinge axis encloses with the sliding surface in a direction towards the actuating spindle that via a link exerts a force on the locking lever.

As long as the actuation angle is obtuse, a pushing force results in a pushing force against the backside of the flap thereby wedging the flap closed towards the valve seat. A dead centre of the locking lever movement over the sliding surface arises where the radius from the locking lever hinge axis to the point of contact intersects the sliding surface at an angle of 90 degrees. In case the locking lever is pushed beyond such dead centre the actuation angle becomes acute and a pushing force will no longer result in a pushing force on the back side of the flap and the locking lever no longer wedges the flap closed against the valve seat.

The spindle provides for activation from the outside of the housing by a rotational motion. Inside the housing, the spindle is linked to the locking lever such that the spindle drive may exert an actuation force on the locking lever and thereby control the movement of the locking lever around the second hinge axis in either direction. Moving the locking lever towards the flap and the flow passage deploys the locking lever, whereas the opposite movement away from the flap and the flow passage retracts the locking lever. Typically, the spindle drive acts on the locking lever between the second hinge axis on the proximal end and the distal end. Pushing the locking lever away from the spindle drive thus deploys the locking lever, while a pulling force retracts the locking lever.

Typically, the spindle drive is mounted in a valve box in the housing wall. Advantageously, the spindle drive may be arranged in a removable valve bonnet giving easy access to the control chamber and the valve trim. When mounted in an operational position on an underground pipeline the spindle typically points in an upward direction for manual operation or motorised drive from above ground level. For most practical underground applications, the spindle is preferably perpendicular to the flow passage.

When closing the valve to shut off the flow, the actuation force provided by the spindle drive acts on the locking lever so as to wedge the locking lever between the flap and the housing. The closing force acting on the flap is thus composed of the force transferred from the valve housing via the second hinge axis and along the locking lever on the one hand and the actuation force exerted by the spindle drive on the other hand.

The closer the locking lever is to the dead centre of its movement against the flap with the flap in the closed position, the bigger the portion of the closing force that is taken up by the housing and accordingly, the smaller the portion of the closing force becomes that has to be provided by the actuation mechanism. Thereby the actuation torque required for driving the spindle of the shut-off valve in order to achieve a given closing force is substantially reduced as compared to other designs, such as the commonly used gate valves, in particular around the traditionally critical shut-off / break-open point.

A smaller actuation force and a reduced total/maximum load on the spindle drive have the advantage, that less torque is required when operating the spindle drive and the spindle drive as well as the associated operation means for providing the torque to the spindle from the outside of the valve can be dimensioned smaller. Accordingly, this furthermore results in a reduced energy consumption of motor driven operation means.

Advantageously in the closed position, the flap is inclined with respect to the axial direction of the flow passage, the backside of the flap facing in an upward direction towards the control chamber / actuation mechanism.

Further advantageously, when the flap is in the closed position, the radius of the locking lever from the second hinge axis to the contact point is oriented substantially parallel to an opening force resulting from a fluid pressure acting on the front side of the flap.

By hinging the locking lever just outside the flow passage in the control chamber, the locking lever may be fully retracted from the flow passage leaving no obstructions to the flow and/or any in-line maintenance equipment. Furthermore, the locking lever length and hinge geometry may be configured so as to hide the locking lever behind the flap in the open position. Thereby a short installation length that is essentially determined by the diameter of the valve flap in a direction perpendicular to its hinge-axis and that is compatible with installation length standards, such as EN 558 are achieved.

Further according to one embodiment of the invention, the friction coupling is configured so as to disengage from the back-side of the flap when retracting the locking lever, thereby allowing for check valve operation, wherein the flap opening is limited by the position of the distal end of the locking lever or a stop provided in the valve housing to define the open position of the flap. By allowing the friction coupling to disengage from the sliding surface a combined shut-off and check-valve operation is achieved, where only the closing movement is forced.

In shut-off valve operation, the spindle drive fully deploys the locking lever thereby forcing the flap into its closed position.

In check valve operation, the flap motion is substantially controlled by the fluid flow. The flap may be opened by fluid flow in a first direction from the first opening towards the second opening, whereas the flap automatically closes when fluid flows in the second direction opposite to the first direction, i.e. from the second opening towards the first opening. The position of the flap may be biased towards the valve seat by gravity acting on the flap being hinged above its centre of gravity and/or by means of elastic means, such as a spring.

By limiting the movement of the flap with the locking lever, it is achieved that the maximum unidirectional flow through the check valve can be regulated. Eventually the lever mechanism may be fully retracted into the control chamber and the flap may be swung to its fully open position as limited by the geometry of the valve housing defining an end point for the hinged motion of the flap.

Further according to one embodiment of the invention, the distal end of the locking lever is guided in a sliding link attached to the backside of the flap so as to forcedly control both the closing and opening of the flap.

In this embodiment, the valve operates as a shut-off valve where both opening and closing are forcedly controlled by applying a corresponding torque to the spindle drive. By attaching the locking lever to the backside of the flap, the locking lever can exert both pushing forces and pulling forces on the flap, wherein pushing is in the closing direction and pulling is in the opening direction. In a lateral direction perpendicular to the hinge axis of the flap, the distal end of the locking lever is free to slide along a guide way defined by the sliding surface for taking up the pushing forces towards the back side of the flap and by an opposing guide face configured to take up the pulling forces in a direction away from the back side of the flap. The sliding link may, for example, be implemented as a pin in a guide rail that is arranged on the backside of the flap and attached thereto. The guide rail may be provided with end stops limiting the sliding movement of the distal end of the locking lever with respect to the back side of the flap.

Further according to one embodiment of the invention, a stop is provided for the movement of the locking lever against the backside of the flap in the closed position, just before the locking lever passes dead centre.

The constraints defining the locking lever movement, such as the location and orientation of the second hinge axis, the length of the locking lever, the arrangement and shape of the sliding surface and the end stops for the movement of the locking lever, may be configured such as to prevent the locking lever from passing beyond any dead centre even when the flap is in the closed position. As a consequence, a force exerted by the spindle drive on the locking lever for deploying the locking lever will always result in a pushing force pressing the flap towards its closed position against the valve seat.

In the closed position, the flap may be subject to a fluid pressure from the first inlet, thus acting on the front side of the flap. The resulting opening force is countered by the wedging action of the locking lever transferring the opening force partly via the second hinge axis to the housing and partly via a link to the spindle drive. In fact, a pushing force exerted by the spindle drive on the locking lever is required in order to maintain the wedging action pressing the flap seal against the valve seat. Relieving that pushing force by retracting the locking lever will immediately allow the flap to be opened by an opening force acting on the flap, e.g. due to a force resulting from a fluid pressure acting on the front side of the flap or due to a pulling force applied by the retracting locking lever to the backside of the flap.

The end stop is preferably arranged just before the locking lever reaches dead centre so as to maximize the wedging action, i.e. the force transferred via the locking lever to the housing, and correspondingly, minimize the actuation component of the closing force required for maintaining the shut-off valve in the closed position.

Further according to an alternative embodiment of the invention, a stop is provided just past dead centre of locking lever movement against the backside of the flap, when the flap is in the closed position.

The stop is provided as an end stop on the sliding surface on the back side of the flap, limiting the movement of the distal end of the locking lever with respect to the back side of the flap, when actuating the locking lever for closing the flap. The movement is limited close to but just beyond the dead centre thereof. Thereby a snap lock effect is achieved, wherein the locking lever at the end of its travel is toggled into a stable self-locking position, where the locking lever exerts a locking force against the flap in the closed position, and the valve is closed in a stable self-locked position without any forces acting on the spindle drive. The stable self-locking position is defined by the sliding surface tending to push the locking lever further beyond the dead centre and the end stop limiting the movement of the locking lever in that direction.

The toggle action implies the presence of an elastic element in the line of force from the housing via the locking lever hinge (second hinge), along the locking lever across the flap to the valve seat. Preferably, a soft seal is provided between the flap and the valve seat. The soft seal may thus act as such elastic element, wherein the snap lock engages against the elasticity of the soft seal. The end stop has to be provided such that the locking lever in the stable self-locking position exerts a closing force sufficient to ensure a fluid tight seal between the flap and the cooperating valve seat surface.

In cases, where the seal between the flap and the valve seat might be a hard seal, the elasticity required for the snap lock action may be provided, e.g. by the sliding surface on the back side of the flap, by an element provided at the distal end of the locking lever, and/or an elastic element integrated in the construction of the locking lever hinge.

The location of the end stop with respect to the dead centre may be adjustable/selectable, e.g. by providing for different mounting positions on the sliding surface/guide way/flap, such that the valve may be (re-)configured as a valve with or without a self-locking valve trim. Alternatively or in addition thereto, the valve may be designed to be (re-)configured for forced open-close operation or for combined check-valve and shut-off operation, e.g. by merely exchanging a guide way detachably mounted on the back side of the flap for a sliding surface only adapted for transmitting pushing forces from the locking lever to the flap. Such a flexible (re-)configuration is particularly advantageous in production, where identical component parts may be used for building different types of valves, or may be useful for reconfiguring a valve at a later point, e.g. under refurbishment, with a minimum of parts to be replaced.

Further according to one embodiment according to the invention, a roller is provided at the distal end of the locking lever. Preferably, the direction of the roller axis is substantially parallel to the hinge axes of the locking lever and/or flap. The roller reduces the friction forces, thereby reducing forces required to actuate the friction coupling between the locking lever and the backside of the flap.

Further according to a preferred embodiment according to the invention, the spindle is of the non-rising type with a nut arranged for linear displacement on a thread on the end of the spindle extending into the control chamber, the nut being linked to the locking lever.

A spindle of the non-rising type is advantageous for underground applications, in particular where an operation rod extends the valve spindle to ground level for operation from above ground.

By rotating the valve spindle, the nut travels linearly along the direction of the spindle axis. Advantageously, the nut is linked to the locking lever such that a downward movement, i.e. a movement towards the flap, deploys the locking lever, and an opposite of the nut in an upward direction retracts the locking lever. Further advantageously, the valve spindle is with respect to the locking lever and the flap arranged such that the deployment force at the nut is substantially directed along the spindle axis when the flap is in the closed position. The largest actuation forces occur when the flap is brought in its closed position and pressed against the valve seat for shutting the valve seal. By directing these forces essentially along the spindle axis, an asymmetric / off-axis load that may be detrimental to the spindle seal or life time is avoided.

Further according to one embodiment of the invention the nut is linked to the locking lever by one or more connecting rods, each connecting rod extending from a first pivot on the nut to a second pivot on the locking lever, the respective rotation axis of the pivots being substantially parallel to the hinge axis of the locking lever. Thereby a flexible link is established between the translating nut of the spindle drive and the locking lever.

Advantageously in the closed position of the flap, the connecting rod is arranged substantially parallel to the direction of the spindle/stem such that a straight line from the first pivot to the second pivot perpendicular to the pivot axes is substantially parallel to the spindle axis. Thereby, close to the closed position of the flap, the actuating forces transferred from the spindle drive via the link to the locking lever are directed along the spindle axis so as to avoid detrimental off-axis force components.

Further according to one embodiment of the invention, the axis of the second pivot coincides with the axis of the roller. Thereby the total number of parts in the assembly is reduced thus obtaining a simplified assembly. Furthermore, by linking the spindle drive to the distal end of the locking lever, the longest possible arm is provided where the lowest actuation force is required for actuating the locking lever at the expense of a larger displacement.

Further according to an alternative embodiment of the invention, the nut is linked to the locking lever by means of a sliding element fixed to the nut, the sliding element being guided in a cooperating guide way provided on the locking lever. Sliding elements may e.g. be a pin, bolt, roller or the like arranged transversely of the locking lever and engaging a cooperating guide way, for example in the form of a slot provided in the locking lever in a lengthwise direction from the proximal end to the distal end.

Further according to one embodiment of the invention, a stop defining the open position of the flap is configured as a flap seat cooperating with the flap so as to separate the control chamber from the flow passage when the flap is in the open position.

Thereby the accumulation of impurities carried along by the fluid flow, such as mud, sand or gravel, in the control chamber and the flap driving mechanism is reduced to a minimum when the flap is in the open position. Furthermore, by forming the front side of the flap according to the shape of the flow passage, flow resistance of the valve when fully open is minimized, and cleaning and/or inspection apparatus easily passes without getting caught by irregularities.

Further according to one embodiment of the invention, the valve housing comprises a housing body and a valve bonnet, and the first and second hinges are supported by respective mounts, wherein the first hinge mount and/or the second hinge mount are clamped between the housing body and the valve bonnet.

The valve bonnet and housing body cooperate to form the housing / shell of the valve and are flanged together. A sealed joint is provided at the interface between the body and the bonnet. The valve body comprises the flow passage with an opening towards the control chamber. The valve bonnet may at least partially comprise the control chamber receiving the actuation mechanism for controlling the flap. Furthermore, the bonnet holds the spindle which is passed through a valve box arranged at the top of the bonnet.

The first hinge mount supports the first hinge, i.e. the flap hinge. The second hinge mount supports the second hinge, i.e. the locking lever hinge. Clamping at least one of the hinge mounts between the housing body and the valve bonnet facilitates the assembly/disassembly of the valve in production and/or for maintenance and/or repair.

In the following, the invention is by way of example explained with reference to the drawings. The drawings show in
Fig. 1 a perspective view, partly cut away, of one embodiment of a combined shut-off and check-valve according to the invention,
Fig. 2 a sectional view of a further embodiment of a combined shut-off and check-valve,
Fig. 3 a sectional view of one embodiment of a shut-off valve according to the invention for forced closing and opening operation,
Fig. 4 a detail of a lever mechanism,
Fig. 5 a sectional view of a further embodiment of a shut-off valve according to the invention, and
Fig. 6-8 sectional views of details of different hinge mounts.

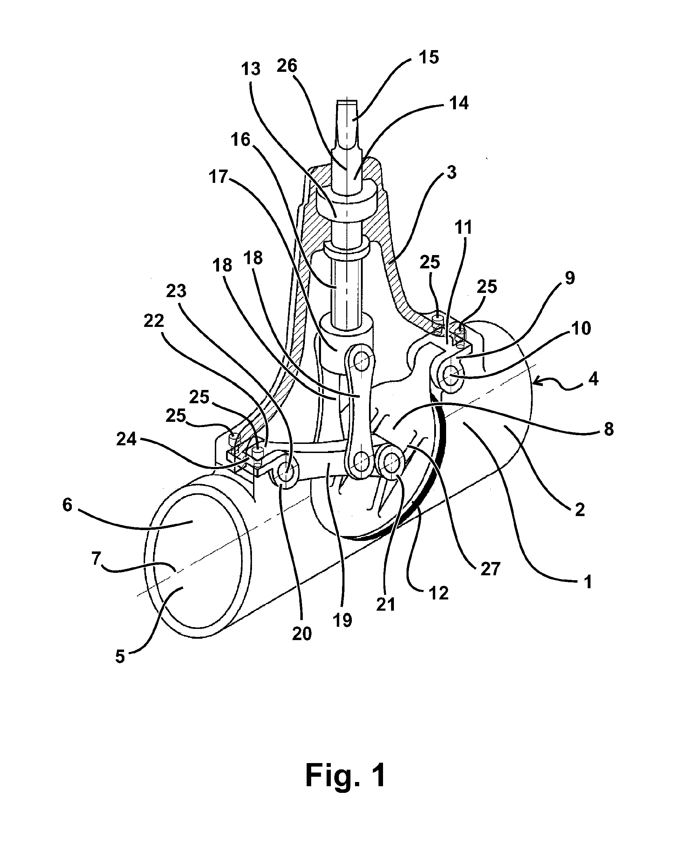

Fig. 1 shows in a perspective view, partly cut away, one embodiment of a shut-off valve according to the invention, wherein the valve is suitable for check-valve operation. The shut-off valve comprises a valve housing 1 with a housing body 2 and a valve bonnet 3 attached thereto. The valve body 2 has at a first end a first opening 4, in the following referred to as inlet, and at a second end a second opening 5, in the following referred to as outlet. At the first and second ends, the valve body may be provided with suitable known flanges (not shown) for easy installation in an underground pipe/supply line for transporting liquid or gaseous fluids.

The valve body defines a flow passage 6 for fluid flow between the inlet and the outlet, wherein the flow is substantially along a flow axis defining an axial direction 7. Inside the valve housing 1, a flap 8 is attached to a first hinge 9 having a first hinge axis 10 that is arranged outside the flow passage 6 in a direction transverse of the axial direction 7. The hinge 9 is arranged inside the housing 1 and attached thereto by means of a hinge mount 11. The hinge construction may be of any suitable type. For example, the hinge action may be achieved by attaching the flap 8 via a pivot pin to the hinge mount 9. Alternatively, the hinge may also be of the flexible type comprising a flexible material connecting the flap 8 to the hinge mount 9 in order to provide the hinge action.

In Fig. 1, the flap 8 is shown in its closed position, where the flap 8 blocks the flow passage 6. In the closed position, the front side of the flap 8 faces towards the inlet and the back side of the flap faces towards the outlet. A fluid tight seal between the inlet and outlet is provided by pressing the flap 8 against a valve seat on the inner walls of the housing 1 in a direction towards the inlet. Sealing means 12, such as a soft seal, may be provided on the periphery of the flap 8. The sealing means 12 cooperate with the valve seat to shut off any fluid flow through the flow passage 6, when the flap 8 is in the closed position.

To open the valve, the flap 8 may be swung around the first hinge axis 10 in a direction away from the inlet towards an open position, thereby giving the flow passage free for fluid flow 6. In the open position, the flap 8 is fully removed from the flow passage 6 such that no obstacles obstruct the flow passage, when the flap 8 is in the open position. By bringing the flap 8 to an intermediate position between the closed and the open position, the flow through the flow passage 6 may be regulated.

The movement of the flap may be controlled via a lever mechanism that is operated by means of a spindle drive 13. The spindle drive 13 comprises a spindle 14 extending along a spindle axis 26 from the inside to the outside of the housing 1. The outside portion of the spindle 14 is provided with engaging means 15 allowing for the connection of operating means, such as an extension drive rod (not shown). The portion of the spindle 14 extending in the inside of the housing 1 is provided with a thread 16 on which a nut 17 having a cooperating thread is arranged to travel in the direction of the spindle axis 26 when the spindle 14 is turned. Preferably for underground applications, the spindle axis 26 is substantially perpendicular to the flow axis 7 of the flow passage 6.

Via links 18, the nut 17 is connected to a locking lever 19. The links 18 are connected to the locking lever 19 with a pivot that is located between a proximal end 20 and a distal end 21 of the locking lever 19, preferably close to the distal end 21. The locking lever 19 is at the proximal end 20 attached to a second hinge 22 and may be swung around a second hinge axis 23 that is substantially parallel to the first hinge axis 10 of the flap 8. The second hinge 22 is arranged inside the housing and attached thereto by means of a second hinge mount 24. In this particular embodiment, both hinge mounts 11 and 24 are clamped between the body 2 and the bonnet 3 by means of fastening means, such as bolts 25, fastening the valve bonnet 3 to the body 2.

The spindle drive 13 determines via the links 18, the locking lever 19 movement by the translational movement of the nut 17 according to spindle 14 rotation. The locking lever 19 is deployed by rotating the spindle 14 so as to move the nut 17 in a direction towards the flow passage 6. Accordingly, the locking lever 19 is retracted when the spindle 14 is turned in the opposite direction so as to move the nut 17 away from the flow passage 6.

When deployed, the locking lever 19 engages with its distal end 21 a sliding surface 27 on the back side of the flap 8 and a friction coupling is established, wherein the locking lever 19 wedges between the second hinge 22 at the proximal end 20 of the locking lever 19 and the backside of the flap 8 at the distal end 21 of the locking lever 19, so as to apply a closing force pushing the flap 8 in a direction towards the valve seat.

By retracting the locking lever 19 the distal end 21 of the locking lever 19 may be removed from the back side of the flap 8 and give the movement of the flap 8 free. The flap 8 may now move freely and independent of the lever mechanism between the closed position and an intermediate position, where the flap 8 movement is stopped again by the distal end 21 of the locking lever 19, or if the locking lever is fully retracted, by the open position. The movement of the flap is now subject to the fluid flow through the flow passage 6. Flow in a direction from the inlet to the outlet may open the flap 8, while a backflow in the opposite direction, i.e. from the outlet towards the inlet, acts to close the flap, thereby preventing such backflow to reach the inlet. The shut-off valve now operates as check-valve for unidirectional flow from the inlet to the outlet, wherein the maximum flow in that direction may be limited by adjusting the position of the locking lever 19.

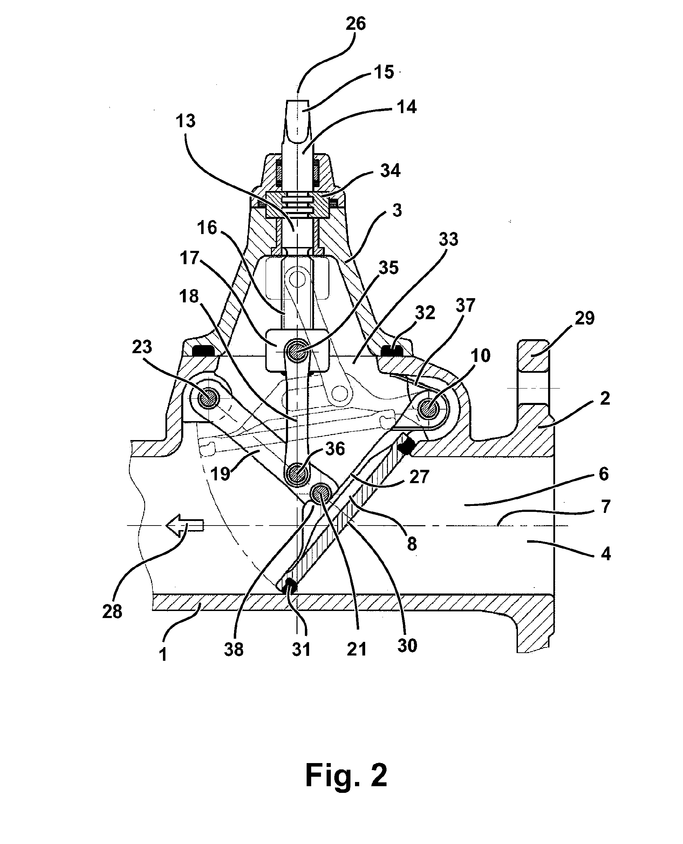

Fig. 2 shows a sectional view of a further embodiment of a shut-off valve according to the invention that is suitable for operation as a check-valve when the mechanism controlling the closing of the valve member is retracted. As in the embodiment of Fig. 1, the valve housing 1 comprises a body 2 and a bonnet 3 attached thereto. The body 2 defines a flow passage 6 for fluid flow along an axial direction 7 between and inlet 4 at a first end and an outlet (not shown) at a second end. At the first and second ends, flanges 29 are provided for connection of the valve housing 1 to corresponding flanges in a pipeline. The fluid flow may be shut off by bringing flap 8 into the closed position, where the flap 8 blocks the flow passage 6, the front side 30 of the flap 8 facing towards the inlet 4. In the closed position, a soft seal 31 arranged on the periphery of the flap 8 engages a valve seat at the inner walls of the valve body 2, thereby sealing the flow passage 6.

The valve trim is arranged in a control chamber 33 that is formed on the side of the valve body 2 in combination with the bonnet 3 sealed thereto with sealing means 32. The bonnet 3 is fitted with a valve box 34 holding the spindle drive 13 of the non-rising type. The end of the spindle 14 extending into the control chamber 33 is provided with an outer thread 16 on which nut 17 having a cooperating inner thread travels upon rotation of the spindle 14 in directions along the spindle axis 26. The movement of the nut 17 is transferred via two connecting rods 18 to the locking lever 19, only one of the connecting rods 18 being visible in Fig. 1. The connecting rods are arranged substantially symmetrically on either side of the nut and extend from a first pivot 35 on the nut 17 to a second pivot 36 on the locking lever 19. Thereby the locking lever 19 may be deployed to control the closing of the flap 8, and retracted to give the flap free for check-valve operation as described above. The direction of unidirectional flow for check-valve operation is indicated by arrow 28.

In the embodiment shown in Fig. 2, both the flap 8 and the locking lever 19 are hinged to respective hinge mounts provided on the body 2. The movement of flap 8 around the first hinge axis 10 may be biased towards the closed position by means of a spring 37 and/or by the weight of the flap 8. Attaching the hinge axes 10, 23 to the housing body has the advantage that no wedging forces are directed across the sealing interface 32 between the body 2 and the bonnet 3. Only the actuation forces of the spindle drive 13 are thus acting on that seal 32.

All hinge axes 10, 23 and pivots 35, 36 shown in Fig. 2 point in a direction substantially perpendicular to the drawing plane, whereas the directions of the flow axis 7 and the spindle axis 26 are in the drawing plane. Advantageously, the locking lever hinge axis 23 is placed at a distance from the flap hinge axis 10, the distance approximately corresponding to the length of the flap 8 in a direction perpendicular to the flap hinge axis 10.

It will be appreciated by the skilled person, that in a typical underground mounting position of the valve, the control chamber 33 is arranged on the upper side of the valve body 2, i.e. the side facing towards ground level, such that the spindle axis 26 points upwards to ground level and the flap hinge axis crosses above the flow passage 6 in a direction traverse of the flow axis 7.

Advantageously, in the closed position, the valve trim is arranged with the following angle geometry: The flap 8 is tilted with respect to the direction of the flow axis 7 at an angle of between 30 and 60 degrees, preferably about 45 degrees, the front side of the flap facing in a downward direction away from the spindle drive 13; the connecting rods 18 acting on the locking lever 19 extend substantially parallel to the spindle axis 26; and the locking lever 19 is wedged to the flap 8 in a position close to perpendicular to the flap 8, wherein the distal end 21 of the pushes on the sliding surface 27 and an end stop 38 on the sliding surface 27 prevents the locking lever 19 from passing dead centre of its movement against the sliding surface 27. If self-locking toggle action of the lever mechanism is desired, the end stop 38 on the sliding surface 27 may be moved slightly in a direction away from the hinge axis 10 of the flap, so as to limit the locking lever 19 movement in a stable position close to perpendicular to the flap 8, but just past dead centre. In order to bring the locking lever 19 into that stable position, the distal end 21 has to be snapped in place against the elastic force of an elastic element, which in the present embodiment is provided by the soft seal 31 on the flap 8. In both cases, the location of the end stop 38 has to be chosen such that the closing force exerted by the locking lever 19 on the backside of the flap 8 is sufficient to maintain a fluid tight seal between the flap 8 and the cooperating valve seat.

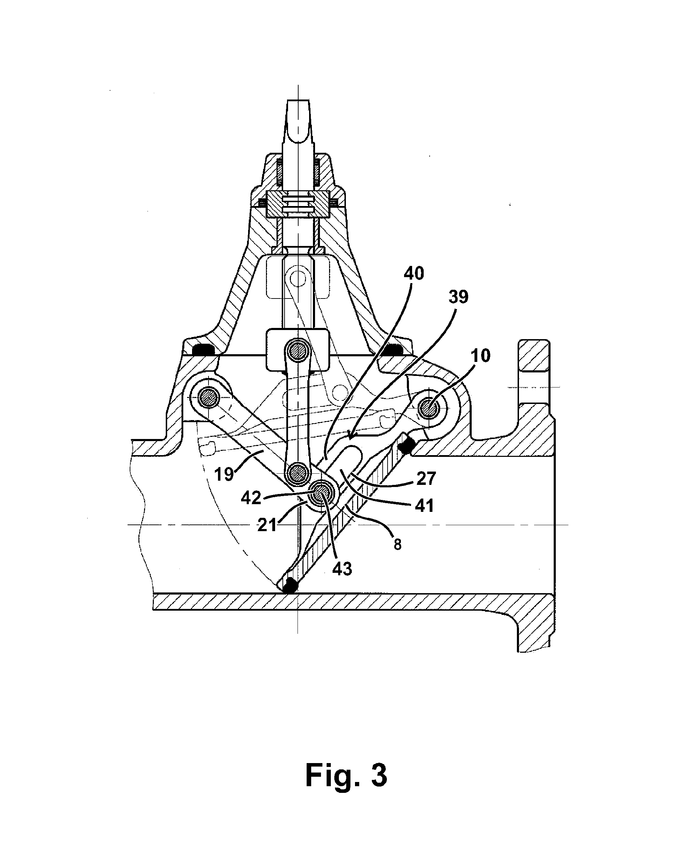

Fig. 3 shows an embodiment of a shut-off valve according to the invention, wherein the valve trim is configured for forced open-close operation. The shut-off valve shown in Fig. 3 is to a large extent identical to the embodiment described above with reference to Fig. 2. The major difference arises in the way the distal end 21 of the locking lever 19 is linked to the flap 8. Whereas the friction coupling between the distal end 21 of the locking lever 19 and the sliding surface 27 of the above-mentioned embodiments only allows transferring a pushing force from the locking lever 19 to the back side of the flap 8, the sliding link 39 also takes up pulling forces in the opposite direction. The sliding link 39 comprises in addition to a sliding surface 27 on the back side of the flap 8 also a bridge 40 so as to define a guide way 41 guiding the movement of a friction element 42 attached to the distal end 21 of the locking lever 19 and extending into the guide way 41. The friction element may, for example, be a pin or a roller with an axis 43. When deploying the locking lever 19, the distal end 21 pushes on the sliding surface 27 and the flap is pushed in the closing direction. When retracting the locking lever 19, the bridge 40 engages the friction element 42 on the distal end 21 and thereby forces the flap 8 to follow the retraction of locking lever 19 and move in the opening direction. Furthermore, since the positioning of the flap 8 via the sliding link 39 and the lever mechanism is fully controlled by the spindle drive 13, a spring biasing the flap 8 in a direction towards the closed position is omitted in the embodiment shown in Fig. 3.

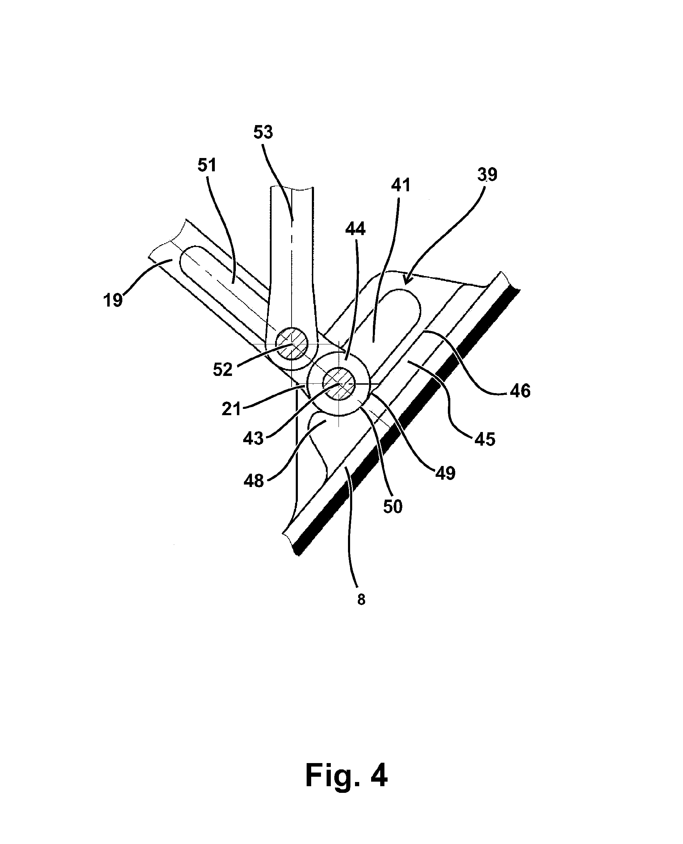

Fig. 4 shows a detail of an alternative embodiment of the lever mechanism of a shut-off valve according to the invention configured for controlling both the opening and the closing of the flap 8. The locking lever 19 comprises at the distal end 21 on axis 43 a friction element 42 (not visible) engaging a guide way 41, thereby establishing a sliding link 39 between the flap 8 and the locking lever 19. In addition, a roller 44 is provided on axis 43 cooperating with a rail 45 to exert a pushing force on the back side of the flap 8. The rail 45 is attached to the back side of the flap in a direction transversely of the hinge axis 10 (not shown in Fig. 4) of the flap 8 and parallel to the swing plane of the movement of the locking lever 19. The rail 45 comprises a running surface 46 for contact between the roller 44 and the rail 45 when the flap 8 is in the open position and in intermediate positions between the open and the closed position. At the end of the running surface 46 pointing away from the hinge axis 10, a stable position for the roller 44 is defined by a barrier 49, followed by a recess 50 and an end stop 48 limiting the further movement of the locking lever beyond the stable position. The stable position of the roller 44 is arranged such that the locking lever 19 wedges the flap 8 in the closed position. By that stable position, a distinct snap effect is achieved indicating to the operator of the valve, that the closed position is reached.

The lever mechanism shown in Fig. 4 furthermore illustrates an alternative linkage between the spindle 14 (not shown in Fig. 4) and the locking lever 19. The locking lever 19 is provided with a slot 51 cooperating with a pin 52 on a link 53 that is stiffly connected to nut 17 (not shown in Fig. 4). For example, the stiff link 53 may be an arm on a fork formed on the nut 17, the fork gripping around the locking lever 19 and being attached thereto by the pin 52 engaging slot 51.

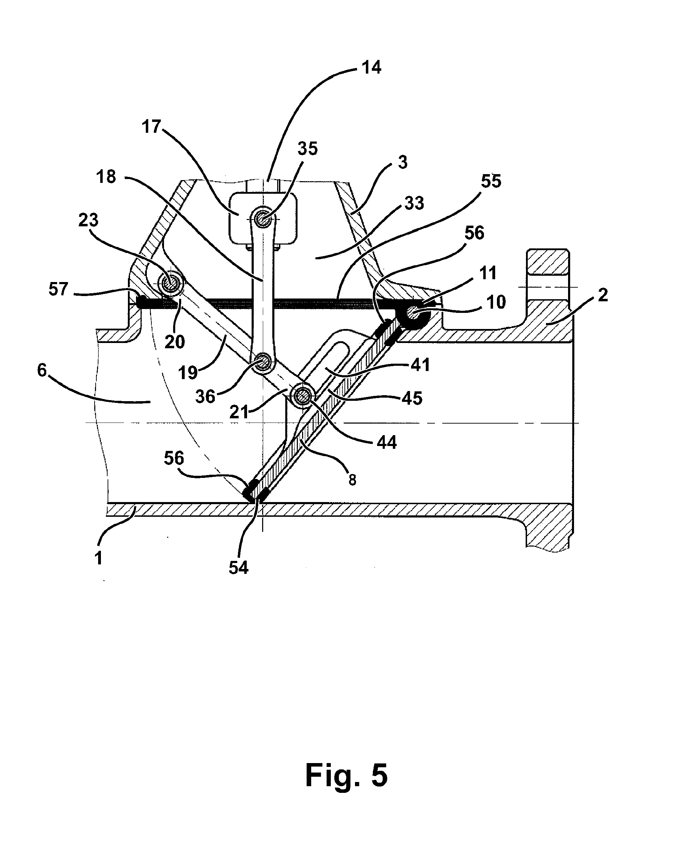

Fig.5 shows yet a further embodiment for a shut-off valve according to the invention configured for forced open-close operation. Inside a valve housing 1 comprising a body 2 and a bonnet 3, a nut 17 linearly travelling along a threaded spindle 14 is linked via connecting rods 18, each extending from a first pivot 35 on the nut 17 to a second pivot 36 on the locking lever 19, to the locking lever 19. In this embodiment, the hinge axis 23 at the proximal end 20 of the locking lever 19 is attached to the inside of the bonnet 3. The distal end 21 of the locking lever is provided with a guide pin travelling in a guide way 41 attached to the backside of the flap 8 and a roller 44 engaging by friction coupling to a rail 45. By rotating the spindle 14 the locking lever may be deployed or retracted so as to move the flap 8 between a closed position where the flap 8 blocks the flow passage 6 and an open position where the flap is fully removed from the flow passage 6. In the closed position a peripheral seal 54 on the front side of the flap 8 cooperates with a valve seat on the inside of the valve body 2 to provide a fluid-tight seal.

The front side of the flap 8 may be shaped as a concavely curved plate such that it aligns with the inner walls of the body 2, when the flap 8 is in its open position, thereby forming a smooth and unobstructed flow passage 6.

A particular feature of the embodiment shown in fig. 5 is a flap seat 55 for receiving the flap 8 in its open position so as to isolate the control chamber 33 from the flow passage 6 when the flap 8 is in the open position. A peripheral seal 56 may be provided to form a fluid tight seal between the flap seat 55 and the flap 8. The peripheral seal 55 may e.g. be attached to the backside of the flap 8, as shown in Fig. 5. Advantageously, the flap seat 55 may be formed to include the hinge mount 11 holding the hinge axis 10 of the flap 8. Further advantageously, the flap seat 55 is clamped between the body 2 and the bonnet 3, and comprises sealing means 57 for sealing the interface where the bonnet 3 is flanged to the body 2.

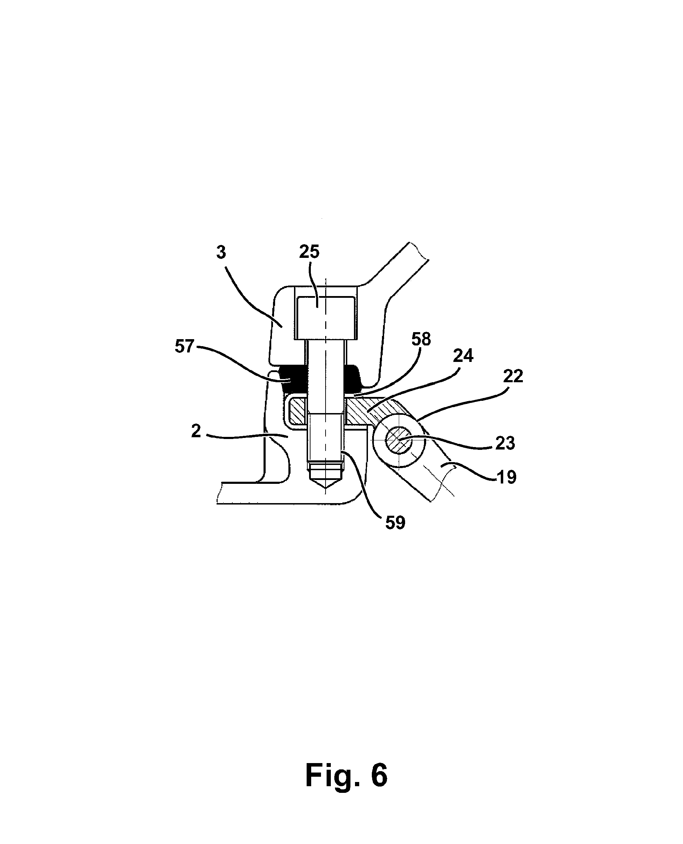

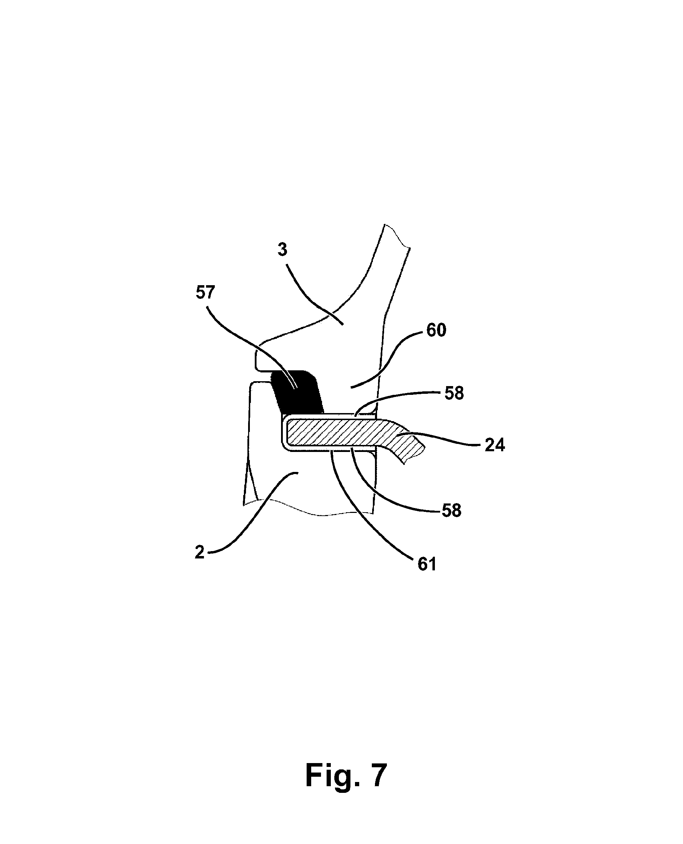

Fig. 6 and Fig. 7 show sectional views of different details of a bonnet to body assembly. The hinge-mount 24 of a hinge 22 for a locking lever 19 protrudes in a direction perpendicular to the hinge axis 23 and in extension of the locking lever 19. The valve bonnet 3 is attached to the valve body 2 by fastening means, such as bolts 25, wherein the hinge mount 24 is clamped at the interface between the valve body 2 and the valve bonnet 3. Fig. 6 shows a section taken at a point of the interface between body 2 and bonnet 3 where the fastening means join the bonnet to body assembly. The bolts 25 engage with their head part mounting holes on the valve bonnet 3, pass through a seal 57 of e.g. EPDF and further through mounting holes in the hinge mount 24 into the valve body 2 where they engage a cooperating inner thread 59. Preferably, the part of the hinge mount 24 clamped at the body to bonnet interface is enveloped by a protective hinge coat 58 made of e.g. polyamide. Fig. 7 shows a section of the same assembly taken at a point between fastening means. The valve bonnet features a rim 60 adapted to clamp the hinge mount 24 to a hinge seat 61 on the valve body 2 when the fastening means 25 are engaged. A recess running along the outside of the rim 60 receives the seal 57 to provide a seal between the valve body 2, the hinge mount 24 and the valve bonnet 3.

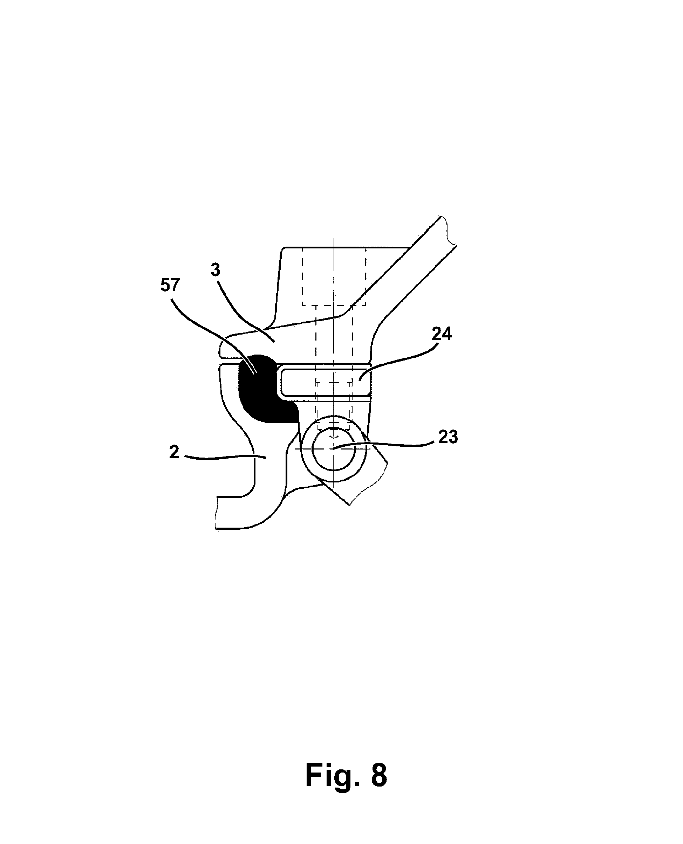

Fig. 8 shows a sectional view of a detail of a further embodiment of a bonnet to body assembly. The locking lever hinge mount 24 is clamped between the body 2, the seal 57 and the bonnet 3 as described above with reference to figures 6 and 7, only in this embodiment, the hinge-mount 24 protrudes in a direction parallel to the hinge axis 23, thereby shortening the total length of the valve trim and thus allowing for a more compact valve housing design with a shorter installation length.

### List of reference numbers

- 1: housing
- 2: body
- 3: bonnet
- 4: first opening
- 5: second opening
- 6: flow passage
- 7: flow axis
- 8: flap
- 9: first hinge
- 10: first hinge axis
- 11: first hinge mount
- 12: seal
- 13: spindle drive
- 14: spindle/stem
- 15: engaging means
- 16: thread
- 17: nut
- 18: link
- 19: locking lever
- 20: proximal end
- 21: distal end
- 22: second hinge
- 23: second hinge axis
- 24: second hinge mount
- 25: fastening means (bolts)
- 26: spindle axis
- 27: sliding surface
- 28: direction of unidirectional flow
- 29: flange
- 30: flap front side

- 31: flap seal
- 32: bonnet seal
- 33: control chamber
- 34: valve box
- 35: pivot
- 36: pivot
- 37: spring
- 38: end stop
- 39: sliding link
- 40: bridge
- 41: guide way
- 42: guide pin
- 43: axis
- 44: roller
- 45: rail
- 46: running surface
- 48: end stop
- 49: barrier
- 50: recess
- 51: slot
- 52: pin
- 53: stiff link
- 54: seal
- 55: flap seat
- 56: seal
- 57: seal
- 58: hinge coat
- 59: thread
- 60: rim
- 61: hinge seat

## Claims

1. Underground shut-off valve comprising a housing (1) defining an axial flow passage (6) for fluid flow in an axial direction (7) between a first opening (4) and a second opening (5) of the housing (1), the valve further comprising a flap (8) having a front side and a back side, the flap (8) being hinged for movement around a first hinge axis (10), the first hinge axis (10) being arranged within the valve housing (1), outside the flow passage (6), and extending transversely of the axial direction (7) such that the flap (8) may be swung between an open position away from the flow passage (6) and a closed position where the flap (8) closes the flow passage (6) fluid-tight by means of a seal provided between the flap (8) and a cooperating valve seat, wherein the valve further comprises inside the housing (1) in a control chamber (33) communicating with the flow passage (6) a lever mechanism configured to act upon the backside of the flap (8) for controlling the flap movement and for locking the flap (8) in the closed position, the lever mechanism being linked to a spindle drive (13) for operation with a spindle (14), the spindle (14) extending from the inside to the outside of the housing (1), **characterised in that** the lever mechanism comprises a locking lever (19), a proximal end (20) of the locking lever (19) being hinged to the housing (1) for movement around a second hinge axis (23) arranged outside the flow passage (6) substantially parallel to the first hinge axis (10), and a distal end (21) of the locking lever (19) being configured to engage the back side of the flap (8) by friction coupling so as to wedge the locking lever (19) against the backside of the flap (8).

2. Shut-off valve according to claim 1, wherein the friction coupling is configured so as to disengage from the backside of the flap (8) when retracting the locking lever (19), thereby allowing for check-valve operation, wherein the flap (8) opening is limited by the position of the distal end (21) of the locking lever (19) or a stop provided in the valve housing to define the open position of the flap (8).

3. Shut-off valve according to claim 1, wherein the distal end (21) of the locking lever (19) is guided in a sliding link (39) attached to the backside of the flap (8) so as to forcedly control both the closing and opening of the flap (8).

4. Shut-off valve according to any of the preceding claims, wherein a stop (38, 48) is provided for the movement of the locking lever (19) against the backside of the flap (8) in the closed position just before the locking lever (19) passes dead centre.

5. Shut-off valve according to any of the claims 1-3, wherein a stop is provided just past dead centre of locking lever (19) movement against the backside of the flap (8).

6. Shut-off valve according to any of the preceding claims, wherein a roller (44) is provided at the distal end (21) of the locking lever (19).

7. Shut-off valve according to any of the preceding claims, wherein the spindle (14) is of the non-rising type with a nut (17) arranged for linear displacement on a thread (16) on the end of the spindle (14) extending into the control chamber (33), the nut (17) being linked to the locking lever (19).

8. Shut-off valve according to claim 7, wherein the nut (17) is linked to the locking lever (19) by one or more connecting rods (18), each connecting rod (18) extending from a first pivot (35) on the nut (17) to a second pivot (36) on the locking lever (19), the respective rotation axis of the pivots (35, 36) being substantially parallel to the hinge axis (23) of the locking lever (19).

9. Shut-off valve according to claim 6 and claim 8, wherein the axis of the second pivot (36) coincides with the axis (43) of the roller (44).

10. Shut-off valve according to claim 7, wherein the nut (17) is linked to the locking lever (19) by means of a sliding element (52) fixed to the nut (17), the sliding element (52) being guided in a cooperating guide way (51) provided on the locking lever (19).

11. Shut-off valve according to any of the preceding claims, wherein a stop defining the open position of the flap is configured as a flap seat (55) cooperating with the flap (8) so as to separate the control chamber (33) from the flow passage (6) when the flap (8) is in the open position.

12. Shut-off valve according to any of the preceding claims, wherein the valve housing (1) comprises a housing body (2) and a valve bonnet (3), and the first and second hinges (9, 22) are supported by respective mounts (11, 24), the first hinge mount (11) and/or the second hinge mount (24) being clamped between the housing body (2) and the valve bonnet (3).
